# EUROPEAN PATENT APPLICATION

(11) **EP 1 054 028 A1**
(43) Date of publication of application: **22.11.2000**
(21) Application number: 00401377.7
(22) Date of filing: 19.05.2000
(51) Int. Cl.: C08F 232/08, C08F 265/04, C09D 11/10, C09J 145/00, C09J 151/00

(54) **Method for producing hydrocarbon/acrylic hybrid resins**

(30) Priority: 20.05.1999 US 315622; 20.05.1999 US 315625; 20.05.1999 US 315624; 20.05.1999 US 315623; 20.05.1999 US 315626
(71) Applicant: WESTVACO CORPORATION, New York New York 10171 (US)
(72) Inventor: Matzinger Michael D., Charlotte, NC 28270 (US)
(74) Representative: Portal, Gérard

(57) **Abstract**

The present invention relates to novel hydrocarbon resins and the process for preparing them. In particular, the invention relates to the production of hydrocarbon/ acrylic hybrid resins which are suitable for use in formulating adhesives, lithographic printing inks, gravure printing inks, ink jet inks, surface sizing compositions, and other coating compositions.

## Description

### FIELD OF INVENTION

The present invention relates to novel hydrocarbon resins and the process for preparing them. In particular, the invention relates to the production of hydrocarbon/acrylic hybrid resins which are suitable for use in formulating adhesives, lithographic printing inks, gravure printing inks, ink jet inks, surface sizing compositions, and other coating compositions.

### BACKGROUND OF THE INVENTION

Hydrocarbon resins are common materials used in formulating adhesives, printing inks, and coating compositions. The basic hydrocarbon resins are produced from either thermal polymerization of reactive olefins composed chiefly of dicyclopentadiene, or Lewis acid catalyzed polymerization of various vinyl aromatic monomers.

Dicyclopentadiene (DCPD) is a material which will readily form resins when heated to temperatures greater than 200°C. Polymerization apparently occurs through cyclopentadiene which is formed when dicyclopentadiene is heated above 170°C. Chain growth of the polymer proceeds via a free radical mechanism with both 1:4 and 1:2 addition occurring as is shown in Equation I below.

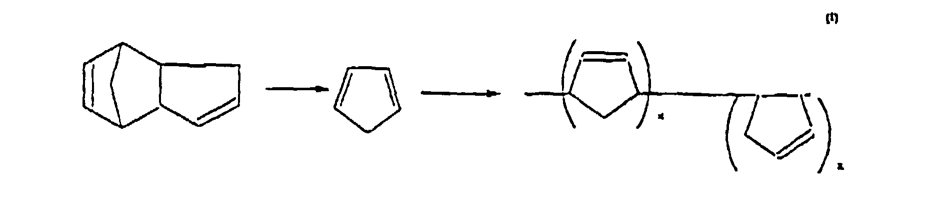

If dicyclopentadiene is heated to and maintained at 200°C, the predominant reaction occurring is oligomerization by the Diels-Alder addition of cyclopentadiene to the norbornyl double bond of the dimer, trimer, etc., as set forth in Equation II below.

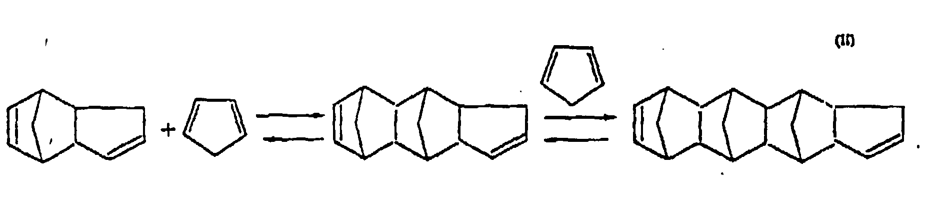

Usually, the largest oligomer formed is the pentamer. The Diels-Alder oligomers are often referred to as thermal polymers of dicyclopentadiene, but their low molecular weight and insolubility in organic solvents make them virtually useless for commercial ink applications and of limited use in adhesive and coating applications.

The reaction of rosin and tall oil with dicyclopentadiene under pressure at temperatures greater than 204°C (400°F) is known to produce a resinous material. The resins produced, claimed useful as synthetic surface coatings, particularly in the paint and varnish field, are light colored resins with low softening points and reduced acid numbers. The softening points of such resins made with rosin are in the range of 102° to 121°C (215° to 250°F). The resin products made from refined tall oil are liquids unless a substantial excess of dicyclopentadiene is employed.

Cyclopentadiene can be used for the reaction with rosin and tall oil. However, as cyclopentadiene quickly equilibrates with dicyclopentadiene under the above conditions, the use of dicyclopentadiene produces similar products.

The drop in acid number of the products indicates the consumption of the acid function of the rosin or tall oil. This results from the addition of carboxyl functions across double bonds to produce esters. It is assumed that this addition occurs across the norbornyl-type double bonds of DCPD, DCPD oligomers, and DCPD polymers, as set forth in Equation III, below.

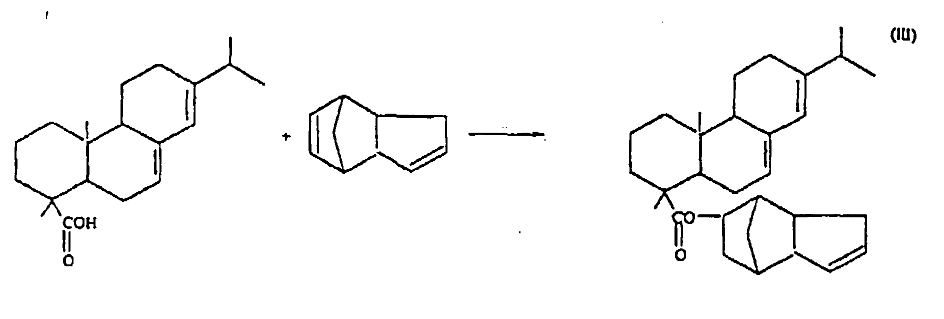

Likewise, the thermal polymerization of dicyclopentadiene with tall oil fatty acids is attributed, in U.S. Pat. No. 4,292,221, to the addition of the acid functions to the bicycloheptene double bonds of the hydrocarbon resin. The patentees teach fatty acid heated with dicyclopentadiene to produce resins suitable for offset printing.

U.S. Pat. No. 4,242,244 discloses that carboxylic acids will add to preformed, thermal cyclopentadiene resins if the resins contain the reactive bicycloheptene double bonds, as set forth in Equation IV below.

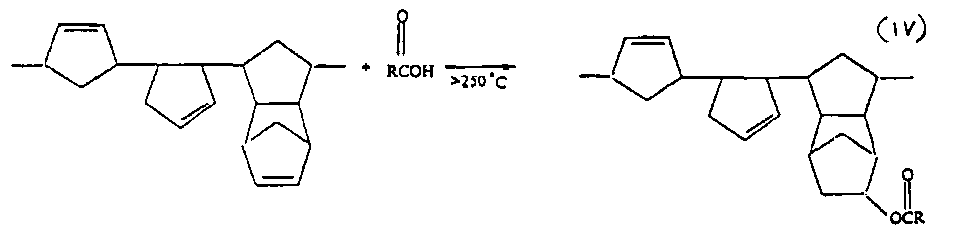

The reaction between dicyclopentadiene, a mixture of dimerized conjugated aliphatic cyclic and non-cyclic dienes of five carbon atoms, and distilled tall oil is described in U.S. Pat. No. 4,056,498 to produce an intermediate which is adducted with maleic anhydride to produce a final ink resin.

U.S. Pat. Nos. 4,362,848, 4,387,182, and 4,389,512 disclose vinyl aromatic and cycloaliphatic acrylate containing dicyclopentadiene-based polymers. These polymers were prepared using boron trifluoride as the catalyst. Monomers such as acrylic acid, methacrylic acid, and styrene were reacted with dicyclopentadiene monomers such that a polymer with the vinyl aromatic and acrylate monomers within the polymer chain were obtained.

U.S. Pat. No. 4,976,783 discloses the preparation of modified cyclopentadiene resins by copolymerizing dicyclopentadiene with monomers such as styrene, methyl methacrylate, and vinyl acetate. These monomers are polymerized within the resulting cyclopentadiene-based polymer and are not attached through addition of the acid functionality of the monomers to the norbornyl site of the cyclopentadiene.

Printing ink resins are disclosed in U.S. Patent No. 4,189,410 to be prepared by reacting dicyclopentadiene, rosin acids and a hydrocarbon containing material selected from debutanized aromatic concentrates, C₅-olefins, and acyclic, conjugated C₅-dienes; and, in U.S. Pat. No. 4,433,100, printing ink resins are prepared by reacting dicyclopentadiene, rosin acids and a hydrocarbon selected from mono-olefins, diolefins, and polyenes having more than 5 carbon atoms and no aromatic rings. In U.S. Patent No. 4,574,057, printing ink resins are prepared by reacting dicyclopentadiene, tall oil or rosin acids, an unsaturated lower aliphatic acid or anhydride, a material with two reactive groups including a hydroxyl group and a hydrocarbon. The hydrocarbon can be that disclosed in U.S. Pat. No. 4,189,410 or 4,433,100, or can be a dimerized aliphatic, cyclic, or non-cyclic diene of five carbon atoms.

Also, rosin-cyclopentadiene resins are disclosed for gravure printing in U.S. Pat No. 4,092,283. A cyclopentadiene resin is heated with rosin and maleic anhydride to 250-270°C to form ester bonds, obtaining resins having an acid number of 60 and a softening point of 165°C. After several hours, metal oxides are added to form resinates.

When rosin and dicyclopentadiene are thermally reacted, low acid number hybrid resins are obtained. Their major shortcoming is low Gardner viscosities relative to standard rosin-based or reactive hydrocarbon lithographic ink resins. In commonly assigned U.S. Pat. Nos. 5,391,615 and 5,403,391 (which are hereby incorporated by reference) preparation of resins with higher viscosities by thermally reacting phenolic-modified rosin and dicyclopentadiene and their use as lithographic ink resins are disclosed. However, problems exist with the manufacture and utilization of these resins. For example, relatively long chemical reaction cycle times are required to produce these resins. Also the product properties of these resins are somewhat restricted.

Therefore, an object of this invention is to solve this major problem by disclosing a method of producing novel hydrocarbon/acrylic hybrid resin compositions.

Another object of this invention is to provide hydrocarbon/acrylic hybrid resin compositions having properties that render them suitable for use in formulating adhesives.

A further object of this invention is to provide hydrocarbon/acrylic hybrid resin compositions suitable for use in formulating lithographic printing inks.

Yet another object of this invention is to provide hydrocarbon/acrylic hybrid resin compositions suitable for use in formulating gravure printing inks.

A further object of this invention is to provide hydrocarbon/acrylic hybrid resin compositions suitable for use in formulating ink jet inks.

Yet another object of this invention is to provide hydrocarbon/acrylic hybrid resin compositions suitable for use in formulating surface sizing compositions for cellulosic materials.

Other objects, features, and advantages of the invention will be apparent from the details of the invention as more fully described and claimed.

### SUMMARY OF THE INVENTION

The objects of this invention are achieved by reacting carboxylic acid functionalized acrylic polymers and/or hydroxyl functionalized acrylic polymers with dicyclopentadiene and other hydrocarbon monomers to produce the desired hydrocarbon/acrylic hybrid resin compositions. Alternatively, the objects of this invention are also achieved by reacting carboxylic acid functionalized acrylic polymers and/or hydroxyl functionalized acrylic polymers with dicyclopentadiene and hydrocarbon resins and/or modified hydrocarbon resins to produce the desired hydrocarbon/acrylic hybrid resin compositions. These compositions may be used to formulate adhesives, printing inks, and other coating compositions with enhanced characteristics. The invention also encompasses the novel resin compositions of this method, as well as the use of the resin compositions in adhesive formulations, lithographic ink formulations, gravure printing ink formulations, ink jet ink formulations, and as surface sizing compositions for cellulosic materials.

The present invention improves upon the methods taught in U.S. Pat. Nos. 5,391,615 and 5,403,391 by teaching the incorporation of acrylic polymers. This utilization permits the practitioner to employ a wider range of synthetic processes, thereby allowing the production of resins with augmented chemical properties. Furthermore, as the present invention permits more flexible production on an industrial scale, the practitioner can decrease production costs by reducing the chemical reaction cycle times.

### DESCRIPTION OF THE PREFERRED EMBODIMENT

The method for producing a hydrocarbon/acrylic hybrid resin composition comprises reacting:
a) about 2 % to about 63 % by total weight of the reactants of dicyclopentadiene;
b) about 2 % to about 63 % by total weight of the reactants of a member selected from the group consisting of hydrocarbon monomers capable of undergoing polymerization with dicyclopentdiene, and combinations thereof;
c) about 33 % to about 96 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof; and
d) up to about 63 % by total weight of the reactants of a member selected from the group consisting of alcohols having at least one hydroxyl group, alkyl amines having at least one amine group, aryl amines having at least one amine group, metal salts of carboxylic acids, *α,*β-unsaturated carboxylic acids, α,β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
at a temperature of from about 160°C to about 300°C for a time sufficient to produce the hydrocarbon/acrylic hybrid resin composition.

A preferred method for producing an hydrocarbon/acrylic hybrid resin composition comprises reacting:
a) about 10 % to about 40 % by total weight of the reactants of dicyclopentadiene;
b) about 10 % to about 40 % by total weight of the reactants of a member selected from the group consisting of hydrocarbon monomers capable of undergoing polymerization with dicyclopentdiene and combinations thereof;
c) about 40 % to about 80 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof; and
d) up to about 40 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
at a temperature of from about 220°C to about 280°C for a time sufficient to produce the hydrocarbon/acrylic hybrid resin composition.

Where desired, hydrocarbon/acrylic hybrid resin compositions may be produced via a two-step process. This method for producing an hydrocarbon/acrylic hybrid resin composition comprises:
1) reacting
   a) about 2 % to about 63 % by total weight of the reactants of dicyclopentadiene;
   b) about 2 % to about 63 % by total weight of the reactants of a member selected from the group consisting of hydrocarbon monomers capable of undergoing polymerization with dicyclopentdiene and combinations thereof; and
   c) about 33 % to about 96 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof;
   at a temperature of from about 160°C to about 300°C for a time sufficient to produce a resin composition; and
2) further reacting
   a) about 35 % to about 98 % by total weight of the reactants of said resin composition, and
   b) about 2 % to about 65 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
   at a temperature of from about 160°C to about 300°C for a time sufficient to produce the hydrocarbon/acrylic hybrid resin composition.

A preferred two-step process for producing hydrocarbon/acrylic hybrid resin compositions comprises:
1) reacting
   a) about 10 % to about 40 % by total weight of the reactants of dicyclopentadiene;
   b) about 10 % to about 40 % by total weight of the reactants of a member selected from the group consisting of hydrocarbon monomers capable of undergoing polymerization with dicyclopentdiene and combinations thereof; and
   c) about 40 % to about 80 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof;
   at a temperature of from about 220°C to about 280°C for a time sufficient to produce a resin composition, and
2) further reacting
   a) about 50 % to about 80 % by total weight of the reactants of said resin composition, and
   b) about 20 % to about 50 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
   at a temperature of from about 220°C to about 280°C for a time sufficient to produce the hydrocarbon/acrylic hybrid resin composition.

A further method for producing a hydrocarbon/acrylic hybrid resin composition comprises reacting:
a) about 2 % to about 63 % by total weight of the reactants of dicyclopentadiene;
b) about 2 % to about 63 % by total weight of the reactants of a member selected from the group consisting of hydrocarbon resins, modified hydrocarbon resins, and combinations thereof;
c) about 33 % to about 96 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof; and
d) up to about 63 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
at a temperature of from about 140°C to about 300°C for a time sufficient to produce the hydrocarbon/acrylic hybrid resin composition.

A preferred method for producing an hydrocarbon/acrylic hybrid resin composition comprises reacting:
a) about 10 % to about 40 % by total weight of the reactants of dicyclopentadiene;
b) about 10 % to about 40 % by total weight of the reactants of a member selected from the group consisting of hydrocarbon resins, modified hydrocarbon resins, and combinations thereof;
c) about 40 % to about 80 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof; and
d) up to about 40 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
at a temperature of from about 180°C to about 26C°C for a time sufficient to produce the hydrocarbon/acrylic hybrid resin composition.

Where desired, hydrocarbon/acrylic hybrid resin compositions may be produced via a two-step process. This method for producing an hydrocarbon/acrylic hybrid resin composition comprises:
1) reacting
   a) about 2 % to about 63 % by total weight of the reactants of dicyclopentadiene;
   b) about 2 % to about 63 % by total weight of the reactants of a member selected from the group consisting of hydrocarbon resins, modified hydrocarbon resins, and combinations thereof; and
   c) about 33 % to about 96 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof;
   at a temperature of from about 140°C to about 300°C for a time sufficient to produce a resin composition; and
2) further reacting
   a) about 35 % to about 98 % by total weight of the reactants of said resin composition, and
   b) about 2 % to about 65 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
   at a temperature of from about 140°C to about 300°C for a time sufficient to produce the hydrocarbon/acrylic hybrid resin composition.

A preferred two-step process for producing hydrocarbon/acrylic hybrid resin compositions comprises:
1) reacting
   a) about 10 % to about 40 % by total weight of the reactants of dicyclopentadiene;
   b) about 10 % to about 40 % by total weight of the reactants of a member selected from the group consisting of hydrocarbon resins, modified hydrocarbon resins, and combinations thereof; and
   c) about 40 % to about 80 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof;
   at a temperature of from about 180°C to about 260°C for a time sufficient to produce a resin composition, and
2) further reacting
   a) about 50 % to about 80 % by total weight of the reactants of said resin composition, and
   b) about 20 % to about 50 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
   at a temperature of from about 180°C to about 260°C for a time sufficient to produce the hydrocarbon/acrylic hybrid resin composition.

Depending upon the characteristics desired, the hydrocarbon/acrylic hybrid resin compositions of the present invention can be formed via two differing methods. In one method, hydrocarbon/acrylic resins are formed by heating a mixture of hydrocarbon monomers (wherein one of the monomers is dicyclopentadiene), one or more acrylic resins and, optionally, specified additional chemical compounds to temperatures of from about 160°C to about 300°C (preferably from about 220°C to about 280°C). The weight ratio of acrylic polymer to hydrocarbon monomers usually is about 2:1 to 1:45. The components are charged to a reactor which is then sealed and heated to a temperature within the desired range. The procedure generally is performed under an inert atmosphere by purging the charged reactor with nitrogen prior to sealing it. As the mixture is heated, an autogenous pressure of between 4.92 and 11.25 K/cm² (70 and 160 psig) is usually generated. After maximizing, this pressure generally falls to between 2.81 and 4.92 K/cm² (40 and 70 psig) as the polymerization proceeds. The reaction mixture is maintained at a temperature within the desired range under pressure for a period sufficient to achieve a hydrocarbon/acrylic hybrid resin possessing the desired properties. Typically a time of at least three hours is employed. Following this, the reactor is vented to reduce the pressure to 0 psig. Next, unreacted hydrocarbon monomers and inert compounds that would depress the softening point of the resin and give it an offensive odor are distilled from the reaction mixture. The removal of these materials is promoted by sparging the resin with nitrogen. Nitrogen is bubbled through the reaction mixture generally at a rate of 0.001 to 0.01 lb of N₂ per lb of reactants per hour. The length of this step is dependent on the desired properties of the resin but typically is conducted from one to ten hours.

Alternatively, in the second method hydrocarbon/acrylic hybrid resins of the present invention are formed by heating a mixture of dicyclopentadiene, one or more hydrocarbon-based resins, one or more acrylic resins and, optionally, specified additional chemical compounds to temperatures of from about 140°C to about 300°C (preferably from about 180°C to about 260°C). The weight ratio of acrylic polymer to dicyclopentadiene and hydrocarbon resins usually is about 10:1 to 1:30. The components are charged to a reactor which is then heated to a temperature within the desired range. The procedure generally is performed at atmospheric pressure; however, the reaction can be performed at an autogenous pressure. The reaction mixture is maintained at a temperature within the desired range for a period sufficient to bind the dicyclopentadiene and acrylic polymers together and to achieve a hydrocarbon/acrylic hybrid resin having the desired properties. Typically a period of time of at least two hours is employed.

Unexpectedly, the method by which the hydrocarbon/acrylic hybrid resin is prepared impacts the properties of the resin. That is, resins with different chemical characteristics are obtained according to whether hydrocarbon monomers or hydrocarbon resins are employed. Compared to the resins made via the first method (using hydrocarbon monomers), the resins produced via the second method (using hydrocarbon resins) are lower in softening point and molecular weight. These former resins may be more appropriate for use in printing ink applications (lithographic inks, gravure inks, and ink jet inks), while the resins made according to the second method may be more appropriate for use in coating, adhesive, and electrophotographic toner applications.

Hydrocarbon monomers suitable for use in the present invention must be capable of undergoing polymerization with dicyclopentdiene. The hydrocarbon monomer typically employed to make the hydrocarbon/acrylic resin is a technical grade dicyclopentadiene which contains from about 75 to 85 % dicyclopentadiene and a variety of other hydrocarbon monomers. Examples of such materials that are commercially available are DCPD 101 (supplied by Lyondell Petrochemical) and DCP-80P (supplied by Exxon Corporation). Other components in the dicyclopentadiene are inert hydrocarbons (such as toluene, xylenes and saturated hydrocarbons with from 4 to 6 carbons), and various codimers and cotrimers formed by the Diels-Alder condensation of butadiene, cyclopentadiene, methylcyclopentadiene, and acyclic pentadienes.

The above-noted hydrocarbon monomers may be employed in thermal polymerization reactions to produce hydrocarbon resins and modified hydrocarbon resins suitable for use in the present method.

Likewise, aromatic hydrocarbons having a vinyl group conjugated to the aromatic ring may be employed to produce hydrocarbon resins and modified hydrocarbon resins suitable for use in the present method. The vinyl aromatic compounds are incorporated into the growing dicyclopentadiene containing polymer by free radical addition to the vinyl group. Examples of such aromatic monomers are styrene, vinyl toluene, α-methyl styrene, β-methyl styrene, indene and methyl indene. Typically, hydrocarbon mixtures that contain from 50 to 100 % of such compounds are used. Other components found in these mixtures are usually inert aromatic compounds, e.g., toluene, xylenes, alkylbenzenes and naphthalene. A commercially available example of such a mixture is LRO-90® (commercially available from Lyondell Petrochemical). A typical analysis of this materials is: xylene (1-5%), styrene (1-10%), α-methylstyrene (1-3%), β-methylstyrene (1-5%), methylindene (5-15%), trimethylbenzenes (1-20%), vinyltoluene (1-30%), indene (1-15%) and naphthalene (1-5%).

When incorporating vinyl aromatic monomers to produce hydrocarbon resins or modified hydrocarbon resins, the procedure for preparing the resin is the same. The vinyl aromatic component is added along with the dicyclopentadiene and other hydrocarbon monomer. The aromatic component is added to the reaction mixture in an amount less than the dicyclopentadiene used. Generally, the aromatic component is employed in an amount no greater than 30 % by weight of the total reaction mixture. Preferably, the vinyl aromatic component is used from about 5 to 20 % of the total reagent charge.

For both synthetic methods, the amount of dicyclopentadiene monomer used in the preparation of the hydrocarbon/acrylic resin must be sufficient so as to provide at least one or more sites for the acrylic polymer to attach. Likewise, the acrylic polymer used in each method must have a sufficient number of acid sites and/or hydroxyl sites so that at least one reaction with a dicyclopentadiene polymer can occur.

Although the mechanism of the reaction is not completely understood, it appears that an important aspect of the acrylic polymer is that the polymer possess:
a) one or more carboxylic acid and/or carboxylic acid-precursor groups (that is, be carboxylic acid functionalized),
b) one or more hydroxyl and/or hydroxyl-precursor groups (that is, be hydroxyl functionalized), or
c) that the polymer be both carboxylic acid functionalized and hydroxyl functionalized. These chemical characteristics permit the acrylic polymer to react with the norbornyl-type double bonds in the dicyclopentadiene resin. In this way the acrylic polymer is chemically bound to the hydrocarbon polymer, thereby yielding a hydrocarbon/acrylic copolymer.

Polymers that contain more than one acid group or hydroxyl group may be used and therefore are capable of reacting with more than one norbornyl-type double bond and acting as cross-linking agents between hydrocarbon polymer molecules. Furthermore, because the number of acid groups or hydroxyl groups on the acrylic polymer can be varied by changing the monomer composition, the crosslinking ability of the polymer can exceed that of modified rosin resins such as fumaric acid-adducted phenolic rosin resins, modified fatty acids such as maleic anhydride-adducted linoleic acid, polyols such as pentaerythritol and sorbitol, polyamines such as 2-methylpentamethylene and hexamethylenediamine, polyaziridines such as IONAC® PFAZ-322 (supplied by Sybron Chemicals, Inc.) and DYTEK®A (supplied by E. I. du Pont de Nemours and Company), and alkanolamines such as diethanolamine. The use of acrylic polymers with multiple acid groups or hydroxyl groups allows the preparation of hydrocarbon/acrylic resins with blends of viscosity, solubility, and softening point properties that cannot be obtained by using resins with one or several acid groups or hydroxyl groups. For example, the use of multiple acid group-containing polymers or multiple hydroxyl group-containing polymers allows the synthesis of hydrocarbon/acrylic resins of molecular weight, viscosity, softening point, and efflux cup dilution properties higher than achievable using materials such as rosin and fatty acid and their derivatives.

Alcohols, alkyl amines, and aryl amines which are suitable for use in the present method are those compounds which are capable of undergoing an insertion reaction across a norbornyl site and/or an esterification reaction with an acid group or an acid equivalent functional group, and the like. Where desired, the molecular weight of the hydrocarbon/acrylic resin can be increased by treating the hydrocarbon/acrylic resin with a compound containing one or more functionalities from the group consisting of polyols, polyamines, polyaziridines, alkanolamines, polysulfides, and alkanolsulfides. Examples of polyols suitable for use in the present methods include pentaerythritol, glycerin, ethylene glycol, sorbitol, and the like. Examples of suitable polyamines include 2-methylpentamethylenediamine, bis (hexamethylene) triamine, 1,3-pentanediamine, and the like. Examples of suitable polyaziridines include IONAC® PFAZ-322 (supplied by Sybron Chemicals, Inc.) and similar compounds. Examples of suitable polysulfides include glycerol dimercaptoacetate, pentaerythritol tetra(3-mercaptopropionate), trimethylolpropane trithioglycolate, polyethylene glycol dimercaptoacetate, and the like. Examples of suitable alkanolsulfides include glycerol monothioglycolate, monoethanolamine thioglycolate, 1-thioglycerol, and the like.

Specific examples of preferred carboxylic acid-functionalized acrylic polymers usable herein include a copolymer of styrene or a styrene derivative with acrylic acid or methacrylic acid. Specific examples of preferred hydroxyl-functionalized acrylic polymers usable herein include a copolymer of hydroxyalkylacrylate or hydroxylalkylmethacrylate with alkyl acrylates, cycloalkyl acrylates, methacrylates, or styrene. Styrene monomers usable herein include styrene, and further, styrene derivatives such as methylstyrene, dimethylstyrene, trimethylstyrene, α-chlorostyrene, α-methylstyrene, and the like. The copolymers may contain other monomers. Examples of other monomers include unsaturated monomers including vinyl halides, vinyl esters, mono vinylidene aromatics, α,β-unsaturated carboxylic acids and esters thereof, unsaturated dicarboxylic anhydrides, and mixtures thereof, and other monomers copolymerizable with styrene and (meth)acrylic acid. Polymerization methods are not particularly limited, and polymers having various monomer ratios are commercially available and may be used in the present invention.

Commercially available carboxylic acid-functionalized acrylic polymers include JONREZ® H-2700, H-2701, H-2702, and H-2704 (supplied by Westvaco Corp.), JONCRYL® 678, 682, and 690 (supplied by S. C. Johnson, Inc.), MOREZ® 101 and 300 (supplied by Morton Int., Inc.), and VANCRYL® 65 and 68 (supplied by Air Products and Chemicals, Inc.). Commercially available hydroxyl-functionalized acrylic polymers include JONREZ® H-2703 (supplied by Westvaco Corp.) and JONCRYL® 587 (supplied by S. C. Johnson, Inc.).

In a further embodiment of the invention, the hydrocarbon/acrylic resin may be reacted with α,β-unsaturated carboxylic acids, α,β-unsaturated carboxylic diacids, α,β-unsaturated carboxylic anhydrides, and the like. Examples of such carboxylic compounds which are suitable for use in the present method include those which are capable of undergoing an insertion reaction across a norbornyl site and/or an esterification reaction with an acid group or an acid equivalent functional group. Other carboxylic compounds which are suitable for use in the present method include those which are capable Diels-Alder addition or ene reaction. Specific examples of such compounds include maleic anhydride, fumaric acid, itaconic acid, itaconic anhydride, crotonic acid, acrylic acid, methacrylic acid, and the like. These compounds react with the resin by a Diels-Alder addition or ene reaction, thus incorporating without loss of their carboxylic acid or anhydride functions. The reaction can be performed in the temperature range of 180-240°C, with the a range of 190-210°C preferred. In general, from about 2 wt.% to about 15 wt. % of the α,β-unsaturated carboxylic acids, diacids or anhydrides can be added to the reaction mixture, but it is preferred that from about 4 wt.% to about 8 wt.% be used.

In a further embodiment of the invention, an α,β-unsaturated carboxylic acid, α,β-unsaturated carboxylic diacid, or α,β-unsaturated carboxylic anhydride can be incorporated into the hydrocarbon/acrylic resin during the polymerization reaction, thus incorporating without loss of their carboxylic acid or anhydride functions. Examples of such compounds are given in the previous paragraph. In general, from about 2 wt.% to about 40 wt. % of the α,β-unsaturated carboxylic acids, α,β-unsaturated carboxylic diacids, or α,β-unsaturated carboxylic anhydrides can be added to the reaction mixture, but it is preferred that from about 4 wt.% to about 15 wt.% be used.

In a further embodiment of the invention, the hydrocarbon/acrylic resin may be reacted with fatty acids, fatty acid compounds, rosin acids, and/or rosin resins. Examples of such compounds which are suitable for use in the present method include those which are capable of undergoing an insertion reaction across a norbornyl site and/or an esterification reaction with an acid group or an acid equivalent functional group.

Fatty acids which are suitable for use in the present invention include, but are not limited to, the following: unsaturated fatty acids, saturated fatty acids, dimerized fatty acids, modified fatty acids, and combinations thereof. Suitable fatty acid compounds include the Diels-Alder cyclo-adducts and the ene-addition reaction products of unsaturated and polyunsaturated fatty acids with acrylic acid, acrylic acid derivatives, fumaric acid, and/or maleic anhydride.

In a further embodiment of the invention, rosin and rosin-based resins can be incorporated into the hydrocarbon/acrylic resin either during or after the polymerization reaction. Rosins suitable for this invention include tall oil rosin, gum rosin and wood rosin. Synthetic sources of these rosin acids may also be used. The modification of rosin with components such as phenols, α,β-unsaturated carboxylic acid, and polyols to produce rosin-based resins is a well established method for producing rosin-based resins. Examples of such suitable rosin-based resins are the JONREZ® RP-300, SM-700, IM-800, and HC-900 resin series (supplied by Westvaco Corp.).

In a further embodiment of the invention, mononuclear phenols, polynuclear phenols, or phenol-based resins (i.e., novolacs or resoles) can be incorporated into the hydrocarbon/acrylic resin either during or after the polymerization reaction. Examples of such phenolic compounds which are suitable for use in the present method include those which are capable of undergoing an insertion reaction across a norbornyl site and/or an esterification reaction with an acid group or an acid equivalent functional group. These phenolic compounds can also be reacted with suitable aldehydes and/or aldehyde acetals either prior to or following the insertion reaction or esterification reaction. Among the phenolic compounds that can be used to modify the resin are phenol, bisphenol-A, para-tert-butylphenol, para-octylphenol, para-nonylphenol, para-dodecylphenol, para-phenylphenol, novolak resins such as HRJ-1166, HRJ-1367, SP-134, SP-560, SP-1068, SP-1077, and SRF-1524 (supplied by Schenectady International, Inc.), resole resins, and mixtures thereof. Aldehydes which are suitable for use in the present invention include, but are not limited to, the following: paraformaldehyde, formaldehyde, and combinations thereof.

The hydrocarbon/acrylic hybrid resin compositions of the present invention are suitable for use as the resin component in both solvent-based pressure sensitive adhesive formulations and hot-melt pressure sensitive adhesive formulations. It is well within the ability of a skilled artisan to employ the novel hydrocarbon/acrylic hybrid resin compositions to produce adhesive formulations with desired characteristics.

Hydrocarbon/acrylic hybrid resin compositions may be characterized by their acid numbers (ASTM D465-92) and softening points (ASTM E28-92). The units for the acid numbers as reported herein are mg KOH/gram of resin.

Lithographic printing ink compositions may be formulated by combining the hydrocarbon/acrylic hybrid resin compositions with solvent and colorant. Hydrocarbon/acrylic hybrid resin compositions suitable for use in formulating lithographic printing inks have acid numbers in the range of about 5 to about 50, preferably from about 10 to about 25. Suitable softening points are from about 100°C to about 210°C for lithographic inks, preferably from about 150°C to about 180°C.

The resins of this invention suitable for use in lithographic inks are further characterized by viscosity and tolerance to ink solvents. Viscosity is determined by timing the rate of rise (in seconds) of a bubble through a solution of the resin in a glass tube from one line of the tube to another line. The resins of this invention suitable for use in lithographic inks are further characterized by line-to-line viscosities of 60 seconds or more at 25°C and at 60% resin solids in a commercially available high-boiling hydrocarbon solvent known as MAGIESOL® 47 (a hydrocarbon solvent supplied by Magie Brothers Oil Co.). The above described properties of the resins of this invention can be controlled by the composition of the resin and the processing conditions.

The colorant generally is a pigment; specifically, a common pigment used in lithographic printing inks well-known to those of ordinary skill in the printing art. In addition to pigments, dyes may also be used. The amount of colorant present in the instant invention is generally from about 1 % to about 20 %; preferably from about 2 % to about 10 %.

Novel hydrocarbon/acrylic hybrid binder resin compositions which are the subject of the present invention are readily dissolved in high-boiling hydrocarbon solvents to give varnishes useful in lithographic inks and particularly in pigment dispersing operations known as flushing. The amount of solvent contained in the ink composition is adjusted to obtain the desired viscosity, rheological, evaporation, and print qualities. Use of varnishes based upon these resin binder compounds in dispersion processes results in lithographic ink formulations having increased gloss, transparency, and color strength, as well as reduced bronzing in both pigment concentrates and finished lithographic inks.

Gravure printing ink compositions with improved color strength, gloss, and transparency characteristics may be formulated by combining the hydrocarbon/acrylic hybrid resin compositions with solvent and colorant. Hydrocarbon/acrylic hybrid resin compositions suitable for use in formulating gravure printing inks have acid numbers in the range of about 20 to about 100, preferably from about 40 to about 80. Suitable softening points are from about 100°C to about 210°C for gravure printing inks, preferably from about 160°C to about 180°C.

The resins of this invention suitable for use in solvent-based gravure printing inks are further characterized by efflux cup dilution. The efflux cup dilution value is the amount of toluene per 100 grams of resin required to reach a viscosity of 18 sec with a #2 Shell cup at 25°C. Resins with an efflux cup dilution value from about 20 to about 300 mL are suitable for use in gravure printing inks. The above described properties of the resins of this invention can be controlled by the composition of the resin and the processing conditions.

The gravure printing ink compositions of the instant invention are prepared by mixing together the hydrocarbon/acrylic hybrid resin binder, a colorant, and a high-boiling hydrocarbon solvent. Other resins, dispersants, surfactants, and cosolvents may be added.

Where desired, the gravure printing ink formulation may include a resinate in addition to a pigment and the present binder composition. Suitable resinates for use in conjunction with the present binder may be prepared by metallization (i.e., the production of metal salts) of the hydrocarbon/acrylic hybrid resin binder with a member selected from the group consisting of metal oxides, metal hydroxides, metal acetates, metal carbonates, and combinations thereof.

The colorant generally is a pigment; specifically, a common pigment used in gravure printing inks well-known to those of ordinary skill in the printing art. The pigment may be predispersed using equipment designed for this purpose such as a ball mill or shot mill. A grind resin can be used during this operation to improve and maintain pigment dispersion. The hydrocarbon/acrylic hybrid resin of this invention may be used in such an application. In addition to pigments, dyes may also be used. The amount of colorant present in the instant invention is generally from about 1 % to about 20 %; preferably from about 2 % to about 10 %.

The high-boiling solvent typically used is toluene. However, xylenes, benzenes, and napthas may also be used. The amount of solvent contained in the ink composition is adjusted to obtain the desired viscosity, rheological, evaporation, and print qualities.

Ink jet ink compositions exhibiting excellent print qualities, jetting properties, storage stabilities, and drying times may be formulated by combining the hydrocarbon/acrylic hybrid resin compositions with colorant and organic solvent (carrier medium). Hydrocarbon/acrylic hybrid resin compositions suitable for use in formulating ink jet inks have an acid number less than 300, preferably less than 120. Suitable softening points are from about 25°C to about 210°C for ink jet ink resins, preferably 50°C to 180°C. The above described properties of the resins of this invention can be controlled by the composition of the resin and the processing conditions.

It is preferred that the ink jet ink compositions comprise:
a) from about 1 % to about 50 % of one or more hydrocarbon/acrylic hybrid ink jet resin composition,
b) from about 1 % to about 20 % of one or more colorants, and
c) from about 30 % to about 90 % of a solvent system.

The ink jet ink compositions employed in the practice of the invention include a carrier medium comprised of at least one organic solvent. The carrier medium is present from about 30 to 90 %, preferably from about 60 to 85 % by weight, based on the total weight of the ink. A variety of solvents may be utilized. Suitable examples include: alcohols, such as methyl alcohol, ethyl alcohol, n-propyl alcohol, isopropyl alcohol, n-butyl alcohol, sec-butyl alcohol, or tert-butyl alcohol; amides, such as dimethylformamide or dimethylacetamide; carboxylic acids; esters, such as ethyl acetate, ethyl lactate, and ethylene carbonate; ethers, such as tetrahydrofuran or dioxane; glycerine; glycols; glycol esters; glycol ethers; ketones, such as acetone, diacetone, or methyl ethyl ketone; lactams, such as N-isopropyl caprolactam or N-ethyl valerolactam; lactones, such as butyrolactone; organosulfides; sulfones, such as dimethylsulfone; organosulfoxides, such as dimethyl sulfoxide or tetramethylene sulfoxide; and derivatives thereof and mixtures thereof. The principle carrier is typically a mixture of a lower ketone and a lower alcohol, each preferably having less than ten carbon atoms. Among these components, methyl ethyl ketone and ethanol are preferred.

The ink jet ink compositions typically contain at least one glycol that serves as a humectant to prevent drying of the compositions during the printing operation, as well as during storage of the compositions. Glycols suitably employed in the practice of the invention include ethylene glycol, diethylene glycol, triethylene glycol, tetraethylene glycol, propylene glycol, dipropylene glycol, glycerine, and polyethylene glycol. Polyethylene glycol is the preferred glycol. The humectant typically is present in an amount up to 30 percent by weight based on the weight of the composition, and preferably from about 2 to about 15 percent by weight.

The carrier media combinations used in the ink jet ink compositions must be compatible with the colorant so that flocculation or settling does not occur as a result of incompatibility. Also, the media combinations must be compatible with the materials of construction of the print head.

No particular limitation is imposed on the type or the amount of colorant used. Any pigment or dye that is soluble and dispersible in the solvent and is compatible with ink jet printing may be employed in the practice of the invention, and one skilled in the art will be able to ascertain such operable colorants. The amount of colorant employed in the practice of the invention is not critical and can be varied within relatively broad ranges. In general, the colorants are present in the composition in amounts varying from about 1 to about 20 percent and preferably from about 2 to about 10 percent, based on the weight of the ink compositions.

Polymers in addition to the hydrocarbon/acrylic hybrid resins of the present invention may be used. Methods of polymerization include solution, emulsion, suspension, and bulk polymerization. While physical properties of the polymers can be effected by the polymerization method, the resultant polymers can provide the desired outcomes of the invention. No particular limitation is imposed on the physical properties of the polymers. Preferred polymers are those having a weight average molecular weight in the range of from about 500 to 100,000, a softening point in the range of from about 25 to 150°C, and a glass transition temperature of less than 150°C. More preferred polymers are those having a weight average molecular weight in the range of from about 1000 to 20,000, a softening point in the range of from about 25 to 90°C, and a glass transition temperature of less than 90°C.

Suitable conductivity control components which optionally may be present include, among others, soluble ionizable salts such as alkali metals and alkaline earth metal halides, nitrates, thiocyanates, acetates, prre potassium thiocyanate, tetraethylammonium chloride, and lithium nitrate. The salts are typically used in an amount of 0.1 to 3 percent by weight of the composition and preferably from about 0.5 to about 1.5 percent by weight.

The ink compositions of the present invention also may be formulated to include one or more surfactants to impart desirable characteristics to the liquid ink compositions. Preferred surfactants include non-ionic surfactants such as fluorinated alkyl esters such as FLUORAD® FC 430 (supplied by 3-M Company).

Consistent with the requirements of this invention, other agents may be incorporated in the ink composition such as agents to prevent intercolor bleed, anticurl and anticockle agents, antiseptic agents, biocides, chelating agents, corrosion inhibitors, desizing agents, mildewproofing agents, penetration promoters, pH adjusters and maintainers, pigment dispersants, resins, surface tension modifiers, and viscosity modifiers.

The inks of the present invention are particularly suited for use in continuous ink jet printers. Inks suitable for use in continuous ink jet printers should have a surface tension in the range of from about 20 to 70 dyne/cm, more preferably, in the range of from about 30 to 50 dyne/cm. The viscosity of the inks should be no greater than 20 Pa s (20 cP at 25°C), and preferably below 12 Pa s (12 cP). The inks must be stable to long term storage and to changes in temperature and relative humidity. In addition, they must dry quickly on the substrate but must not bleed through the substrate. The inks may be adapted to meet the requirements of a particular printer to provide a balance of optical density, water fastness, smear resistance, drying rate, light stability, chemical resistance, and cost. No limitation is placed on the order in which the components of the ink compositions are combined or the method in which they arc combined.

There is no limitation placed on the recording medium used in conjunction with the above printing methods. Any suitable substrate can be employed, including conventional cellulosic papers such as copying paper and bond paper, silica coated papers, glass, aluminum, rubber, vinyl, fabrics, textile products, plastics, polymeric films, wood, and the like.

Resins suitable for use in this invention for employment as surface sizing compositions for cellulosic materials gravure printing ink formulations have an acid number in the range of about 10 to about 300. Suitable softening points are from about 25°C to about 200°C.

The hydrocarbon/acrylic hybrid resins should be properly neutralized in order to disperse the polymer composition in water for application as a surface sizing composition to the cellulosic materials. A sufficient amount of alum should also be employed to permit the formation of the proper aluminum resinate for the desired sizing purpose. The proper addition of such additives for specific applications are well-known to those skilled in the art.

The following examples are provided to further illustrate the present invention and are not to be construed as limiting the invention in any manner. All parts are by weight unless otherwise stated.

### EXAMPLE 1

Into a one-liter autoclave reactor were charged 250 parts of DCPD 101® (a dicyclopentadiene supplied by Lyondell Petrochemical) and 100 parts JONREZ® H-2702 (a polymer having an acid number of 206 supplied by Westvaco Corp.). The charged autoclave was purged with nitrogen and sealed. The reaction mixture was heated to 265°C over a one hour period and was maintained at 265°C for five hours. The reactor was then vented carefully, and the molten resin composition was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for two hours and then discharged into an aluminum pan.

The resulting hydrocarbon/acrylic hybrid resin composition had an acid number of 9 and a Ring and Ball softening point of 178°C. The resin was insoluble in alkaline refined linseed oil and in MAGIESOL® 47 oil (a hydrocarbon solvent supplied by Magie Brothers Oil Co.).

Fourier Transform-Infrared (FT-IF) and Gel Permeation Chromatography (GPC) analysis of the resin was used to confirm a reaction of the acrylic polymer with dicyclopentadiene or a dicyclopentadiene polymer. The presence of the peaks at 1727 cm⁻¹ and 1160 cm⁻¹ in the FT-IR spectrum are consistent with ester formation. GPC analysis provided the following data consistent with polymer formation: 47.4K weight-average-molecular-weight, 266K M_{z}, and 391K M_{z+1}.

A solvent-based pressure sensitive adhesive can be prepared by mixing 50 parts of the hydrocarbon/acrylic hybrid resin composition, 100 parts of hot-polymerized styrene-butadiene rubber, 25 parts of pentaerythritol ester of hydrogenated rosin (104°C softening point), 2 parts of an antioxidant, and 1,167 parts of toluene.

### EXAMPLE 2

Into a one-liter autoclave reactor were charged 400 parts of DCPD 101® (a dicyclopentadiene supplied by Lyondell Petrochemical) and 160 parts JONREZ® H-2701 (a styrene/acrylic polymer having an acid number of 206 supplied by Westvaco Corp.). The charged autoclave was purged with nitrogen and sealed. The reaction mixture was heated to 260°C over a two hour period and was maintained at 260°C for six hours. The reactor was then vented carefully, and the molten resin was poured into an aluminum pan and was allowed to cool. The resin had an acid number of 35.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for two hours and then discharged into an aluminum pan.

The resulting hydrocarbon/acrylic resin composition had an acid number of 38 and a Ring and Ball softening point of 140°C. GPC analysis provided the following data consistent with polymer formation: 10.5K weight-average-molecular-weight, 45.2K M_{z}, and 77.8K M_{z+1}. The resin was insoluble in alkaline refined linseed oil and in MAGIESOL® 47 oil (a hydrocarbon solvent supplied by Magie Brothers Oil Co.).

A hot-melt pressure sensitive adhesive can be prepared by mixing 40 parts of the hydrocarbon/acrylic composition, 40 parts of a styrene-butadiene multiblock copolymer, 20 parts of a pentaerythritol ester of tall oil rosin, 20 parts of naphthenic oil, and 2 parts of an antioxidant.

### EXAMPLE 3

Into a one-liter autoclave reactor were charged 350 parts of DCPD 101® (a dicyclopentadiene supplied by Lyondell Petrochemical) and 100 parts a polymer comprised of 30 wt.% of styrene, 20 wt.% of acrylic acid, and 50 wt.% of maleic half-ester of one-mole ethoxylate of ROSIN SS® (a tall oil rosin supplied by Westvaco Corp.) and having an acid number of 160). The charged autoclave was purged with nitrogen and sealed. The reaction mixture was heated to 260°C over a one hour period and was maintained at 260°C for five hours. The reactor was then vented carefully, and the molten resin was poured into an aluminum pan and was allowed to cool. The resin had an acid number of 17.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for 90 minutes and then discharged into an aluminum pan.

The resulting hydrocarbon/acrylic resin composition had an acid number of 20 and a Ring and Ball softening point of 139°C. GPC analysis provided the following data consistent with polymer formation: 5.8K weight-average-molecular-weight, 34.5K M_{z}, and 62.4K M_{z+1}. The resin was insoluble in alkaline refined linseed oil and in MAGIESOL® 47 oil (a hydrocarbon solvent supplied by Magie Brothers Oil Co.).

A solution which can be employed as a paper sizing composition may be prepared by mixing 45.0 % (by total weight of the solution) of the hydrocarbon/acrylic hybrid resin composition, 1.9 % of a tall oil fatty acid potassium salt, 2.3 % of a dicarboxylic rosin potassium salt, 0.8 % of sodium chloride, 50 % deionized water, and a neutralizing amount of potassium hydroxide in a blender. The resulting solution may be applied to cellulosic materials as a size to impart a hydrophobic character to the material.

### EXAMPLE 4

Into a one-liter autoclave reactor were charged 375 parts of DCPD 101® (a dicyclopentadiene supplied by Lyondell Petrochemical), 150 parts LRO-90® (a hydrocarbon mixture containing vinyl aromatic compounds supplied by Lyondell Petrochemical), and 100 parts JONREZ® H-2702 (a styrene/acrylic polymer having an acid number of 200 supplied by Westvaco Corp.). The charged autoclave was purged with nitrogen and sealed. The reaction mixture was heated to 265°C over a 90 minute period and was maintained at 260°C for four hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for one hour and then discharged into an aluminum pan.

The resulting hydrocarbon/acrylic resin composition had an acid number of 5 and a Ring and Ball softening point of 140°C. The resin was insoluble in alkaline refined linseed oil and in MAGIESOL® 47 oil (a hydrocarbon solvent supplied by Magie Brothers Oil Co.).

A solution which can be employed as a paper sizing composition may be prepared by mixing 45.0 % (by total weight of the solution) of the hybrid resin sizing composition, 1.9 % of a tall oil fatty acid potassium salt, 2.3 % % of a dicarboxylic rosin potassium salt, 0.8 % of sodium chloride, 50 % deionized water, and a neutralizing amount of potassium hydroxide in a blender. The resulting solution may be applied to cellulosic materials as a size to impart a hydrophobic character to the material.

### EXAMPLE 5

Into a one-liter autoclave reactor were charged 350 parts of DCPD 101® (a dicyclopentadiene supplied by Lyondell Petrochemical), 150 parts LRO-90® (a hydrocarbon mixture containing vinyl aromatic compounds supplied by Lyondell Petrochemical),100 parts JONREZ® H-2702 (a styrene/acrylic polymer having an acid number of 200 supplied by Westvaco Corp.), and 25 parts NEODENE® 16 (a 1-hexadecene supplied by Shell Chemical Co.). The charged autoclave was purged with nitrogen and sealed. The reaction mixture was heated to 265°C over a 45 minute period and was maintained at 260°C for five hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for 30 minutes and then discharged into an aluminum pan.

The resulting hydrocarbon/acrylic resin composition had an acid number of 7 and a Ring and Ball softening point of 130°C. The resin was insoluble in alkaline refined linseed oil and in MAGIESOL® 47 oil (a hydrocarbon solvent supplied by Magie Brothers Oil Co.).

### EXAMPLE 6

Into a one-liter autoclave reactor were charged 350 parts of DCPD 101® (a dicyclopentadiene supplied by Lyondell Petrochemical), 150 parts LRO-90® (a hydrocarbon mixture containing vinyl aromatic compounds supplied by Lyondell Petrochemical),100 parts SAAEHA (a polymer comprised of 60 wt.% styrene, 20 wt.% acrylic acid, and 20 wt.% 2-ethyl hexyl acrylate and having an acid number of 128), and 25 parts NEODENE® 16 (a 1-hexadecene supplied by Shell Chemical Co.). The charged autoclave was purged with nitrogen and sealed. The reaction mixture was heated to 265°C over a 45 minute period and was maintained at 260°C for five hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for 30 minutes and then discharged into an aluminum pan.

The resulting hydrocarbon/acrylic resin composition had an acid number of 4, a Ring and Ball softening point of 111°C, a viscosity at 25°C of 9 line-to-line seconds (33 wt.% resin in alkaline refined linseed oil) and 20 line-to-line seconds (50 wt.% resin in MAGIESOL® 47 oil [a hydrocarbon solvent supplied by Magie Brothers Oil Co.]), 45% tolerance (titration of the resin/MAGIESOL® 47 oil solution with additional MAGIESOL® 47 oil until a cloud point is reached), and Gardner color of 11+ (33 wt.% resin in alkaline refined linseed oil).

### EXAMPLE 7

Into a one-liter autoclave reactor were charged 350 parts of DCPD 101® (a dicyclopentadiene supplied by Lyondell Petrochemical), 150 parts LRO-90® (a hydrocarbon mixture containing vinyl aromatic compounds supplied by Lyondell Petrochemical), and 100 parts of SAAEHA (a solution polymer comprised of 60 wt.% styrene, acrylic acid, and 2-ethyl hexyl acrylate and having an acid number of 128). The charged autoclave was purged with nitrogen and sealed. The reaction mixture was heated to 265°C over a 90 minute period and was maintained at 260°C for four hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for 30 minutes and then discharged into an aluminum pan.

The resulting hydrocarbon/acrylic resin composition had an acid number of 5, a Ring and Ball softening point of 121°C, a viscosity at 25°C of 14 line-to-line seconds (33 wt.% resin in alkaline refined linseed oil), and Gardner color of 11+ (33 wt.% resin in alkaline refined linseed oil). The resin was not soluble in MAGIESOL® 47 oil (a hydrocarbon solvent supplied by Magie Brothers Oil Co.).

### EXAMPLE 8

Into a one-liter autoclave reactor were charged 377 parts of DCPD 101® (a dicyclopentadiene supplied by Lyondell Petrochemical), 169 parts LRO-90® (a hydrocarbon mixture containing vinyl aromatic compounds supplied by Lyondell Petrochemical), 52 parts of SAABA (a polymer comprised of 83.5 wt.% styrene, 6.5 wt% acrylic acid, and 10 wt.% butyl acrylate and having an acid number of 47), and 52 parts maleic anhydride. The charged autoclave was purged with nitrogen and sealed. The reaction mixture was heated to 265°C over a 60 minute period and was maintained at 260°C for four hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for four hours and then discharged into an aluminum pan.

The resulting hydrocarbon/acrylic resin composition had an acid number of 46, a Ring and Ball softening point of 152°C, and a efflux cup dilution (#2 Shell Cup, 25°C, 18 sec end point) of 42 mL.

A 50 wt.% solution of the resin was prepared by dissolving 152 parts of the resin in toluene. This solution was placed in a 500-mL, four-neck, round-bottom flask equipped with an electric heating mantle, overhead stirrer, thermocouple, nitrogen inlet tube, and Barret trap attached to a water-cooled condenser. To this solution was added 3 parts lime. The contents were heated to 270°C and water was removed. The resulting resinate had a viscosity of 23 line-to-line seconds, a capillary melt point of 182°C, and a toluene dilution of 130 mL (#2 Shell Cup, 25°C, 18 sec end point). Addition of a pigment dispersion to this toluene solution provides a gravure printing ink formulation with excellent print performance.

### EXAMPLE 9

Into a one-liter autoclave reactor were charged 455 parts of DCPD 101® (a dicyclopentadiene supplied by Lyondell Petrochemical), 143 parts LRO-90® (a hydrocarbon mixture containing vinyl aromatic compounds supplied by Lyondell Petrochemical), 26 parts of SAAEHA (a polymer comprised of 60 wt.% styrene, 20 wt.% acrylic acid, and 20 wt.% 2-ethyl hexyl acrylate and having an acid number of 128), and 26 parts maleic anhydride. The charged autoclave was purged with nitrogen and sealed. The reaction mixture was heated to 265°C over a 30 minute period and was maintained at 260°C for seven hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for four hours and then discharged into an aluminum pan.

The resulting hydrocarbon/acrylic resin composition had an acid number of 23, a Ring and Ball softening point of 162°C, and a efflux cup dilution (#2 Shell Cup, 25°C, 18 sec end point) of 42 mL.

### EXAMPLE 10

Into a one-liter autoclave reactor were charged 455 parts of DCPD 101® (a dicyclopentadiene supplied by Lyondell Petrochemical), 143 parts LRO-90® (a hydrocarbon mixture containing vinyl aromatic compounds supplied by Lyondell Petrochemical), 26 parts IPAFSH28 (a polymer comprised of 35 wt.% α-methyl styrene, 33 wt.% styrene, 27 wt.% acrylic acid, and 5 wt.% NEODENE® 16 (a 1-hexadecene supplied by Shell Chemical Co.) and having an acid number of 184), and 26 parts maleic anhydride. The charged autoclave was purged with nitrogen and sealed. The reaction mixture was heated to 265°C over a 30 minute period and was maintained at 260°C for six hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for four hours and then discharged into an aluminum pan.

The resulting hydrocarbon/acrylic resin composition had an acid number of 26 and a Ring and Ball softening point of 191°C. The resin was not soluble in alkaline refined linseed oil or MAGIESOL® 47 oil (a hydrocarbon solvent supplied by Magie Brothers Oil Co.).

### EXAMPLE 11

Into a one-liter autoclave reactor were charged 390 parts of DCPD 101® (a dicyclopentadiene supplied by Lyondell Petrochemical), 182 parts LRO-90® (a hydrocarbon mixture containing vinyl aromatic compounds supplied by Lyondell Petrochemical), 26 parts SAAEHA (a solution polymer comprised of 60 wt.% styrene, 20 wt.% acrylic acid, and 20 wt.% 2-ethyl hexyl acrylate and having an acid number of 128), 26 parts maleic anhydride, and 26 parts NEODENE® C-16 (a 1-hexadecene supplied by Shell Chemical Co.). The charged autoclave was purged with nitrogen and sealed. The reaction mixture was heated to 265°C over a 30 minute period and was maintained at 260°C for six hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for four hours and then discharged into an aluminum pan.

The resulting hydrocarbon/acrylic resin composition had an acid number of 24, a Ring and Ball softening point of 90°C, a viscosity at 25°C of 5 line-to-line seconds (33 wt.% resin in alkaline refined linseed oil), a Gardner color of 11+ (33 wt.% resin in alkaline refined linseed oil), and a efflux cup dilution (#2 Shell Cup, 25°C, 18 sec end point) of 22 mL.

### EXAMPLE 12

Into a one-liter autoclave reactor were charged 390 parts of DCPD 101® (a dicyclopentadiene supplied by Lyondell Petrochemical), 182 parts LRO-90® (a hydrocarbon mixture containing vinyl aromatic compounds supplied by Lyondell Petrochemical), 26 parts SAAEHA (a polymer comprised of 60 wt.% styrene, 20 wt.% acrylic acid, and 20 wt.% 2-ethyl hexyl acrylate and having an acid number of 128), 13 parts maleic anhydride, and 26 parts NEODENE® C-16 (1-hexadecene supplied by Shell Chemical Co.). The charged autoclave was purged with nitrogen and sealed. The reaction mixture was heated to 265°C over a 30 minute period and was maintained at 260°C for six hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for one hour and then discharged into an aluminum pan.

The resulting hydrocarbon/acrylic resin composition had an acid number of 14, a Ring and Ball softening point of 137°C, a viscosity at 25°C of 8 line-to-line seconds (33 wt.% resin in Alkaline refined linseed oil) and 16 line-to-line seconds (50 wt.% resin in MAGIESOL® 47 oil a hydrocarbon solvent supplied by Magie Brothers Oil Co.), and 44 % tolerance (titration of the resin/MAGIESOL® 47 oil solution with additional oil until a cloud point is reached).

### EXAMPLE 13

Into a one-liter autoclave reactor were charged 390 parts of DCPD 101® (a dicyclopentadiene supplied by Lyondell Petrochemical), 182 parts LRO-90® (a hydrocarbon mixture containing vinyl aromatic compounds supplied by Lyondell Petrochemical), 26 parts 7098-26 (a polymer comprised of 83.5 wt.% styrene, 6.5 wt.% acrylic acid, and 10.0 wt.% isodecyl methacrylate and having an acid number of 44), 13 parts maleic anhydride, and 26 parts NEODENE® C-16 (1-hexadecene supplied by Shell Chemical Co.). The charged autoclave was purged with nitrogen and sealed. The reaction mixture was heated to 265°C over a one hour period and was maintained at 260°C for 6.5 hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for four hours and then discharged into an aluminum pan.

The resulting hydrocarbon/acrylic resin composition had an acid number of 14, a Ring and Ball softening point of 141°C, a viscosity at 25°C of 8 line-to-line seconds (33 wt.% resin in alkaline refined linseed oil), a Gardner color of 12+ (33 wt.% resin in alkaline refined linseed oil), and a efflux cup dilution (#2 Shell Cup, 25°C, 18 sec end point) of 28 mL.

### EXAMPLE 14

Into a one-liter, round-bottom, five-neck flask equipped with a electric heating mantle, overhead stirrer, thermocouple, nitrogen inlet tube, and Barret trap attached to a water-cooled condenser was charged 225 parts of the resin of Example 8. The resin was heated to a temperature of 200°C under a nitrogen blanket and then 11.3 parts diethylene glycol was added. The temperature was increased to 230°C and was maintained for a period of six hours. The resin was sparged for 30 minutes and then discharged into an aluminum pan.

The resulting hydrocarbon/acrylic resin composition had an acid number of 26, a Ring and Ball softening point of 170°C, and a efflux cup dilution (#2 Shell Cup, 25°C, 18 sec end point) of 84 mL.

### EXAMPLE 15

Into a 500-mL, round-bottom, four-neck flask equipped with a electric heating mantle, overhead stirrer, thermocouple, nitrogen inlet tube, and Barret trap attached to a water-cooled condenser was charged 200 parts of the resin of Example 5 and 20 parts maleic anhydride. The temperature was increased to 200°C and was maintained for three hours. Then, 10 parts SP 134 (an alkylphenol-formaldehyde thermosetting resin supplied by Schenectady International Inc.) was added.

After a period of one hour, the resin was discharged into an aluminum pan.

The resulting hydrocarbon/acrylic resin composition had an acid number of 49, a Ring and Ball softening point of 175°C, and a efflux cup dilution (#2 Shell Cup, 25°C, 18 sec end point) of 132 mL.

### EXAMPLE 16

Into a 500-mL, round-bottom, four-neck flask equipped with a electric heating mantle, overhead stirrer, thermocouple, nitrogen inlet tube, and Barret trap attached to a water-cooled condenser was charged 150 parts of the resin of Example 4 and 5 parts maleic anhydride. The resin was heated to a temperature of 180°C under a nitrogen blanket and then 20 parts ROSIN SS® (a tall oil rosin supplied by Westvaco Corp.) was added. The temperature was increased to 275°C and was maintained for a period of three hours. The temperature was decreased to 210°C and then 5.5 grams of pentaerythritol was added. The temperature was increased to 275°C and was maintained for 90 minutes. The resin was then discharged into an aluminum pan.

The resulting hydrocarbon/acrylic resin composition had an acid number of 64, a Ring and Ball softening point of 150°C, and a efflux cup dilution (#2 Shell Cup, 25°C, 18 sec end point) of 86 mL.

### EXAMPLE 17

Into a one-liter autoclave reactor were charged 1401 parts of DCPD 101® (a dicyclopentadiene supplied by Lyondell Petrochemical), 602 parts of LRO-90® (a hydrocarbon mixture containing vinyl aromatic compounds supplied by Lyondell Petrochemical), 120 parts of NEODENE® 16 (a 1-hexadecene supplied by Shell Chemical Co.), and 100 parts JONREZ® H-2701 (a styrene/acrylic polymer having an acid number of 206 supplied by Westvaco Corp.). The charged autoclave was purged with nitrogen and sealed. The reaction mixture was heated to 260°C over a 90 minute period and was maintained at 260°C for five hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 220°C. At 220°C, the nitrogen inlet tube was immersed in the liquid resin and the nitrogen flow was adjusted to a rate of approximately 400 ml/min. The resin was sparged for two hours and then discharged into an aluminum pan.

The resulting hydrocarbon/acrylic resin composition had an acid number of 4, a glass transition temperature of 2°C, a weight average molecular weight of 5960 daltons, a Brookfied viscosity at 135°C of 4780 Pa s (4780 cP), and a Ring and Ball softening point of 79°C.

To a one-liter, four-neck, round-bottom flask equipped with an electric heating mantle, overhead stirrer, thermocouple, nitrogen inlet tube, and Barret trap attached to a water-cooled condenser were added 350 parts of the hybrid resin described in Example 1 and 40 parts maleic anhydride. The contents of the flask were heated to a temperature of 190°C. After five hours at 190°C, the resulting hydrocarbon/acrylic hybrid ink jet resin composition was collected in an aluminum pan. The resin had an acid number of 60, a weight average molecular weight of 7970 daltons, and a softening point of 121°C.

An ink composition suitable for continuous ink jet printers was prepared by mixing 36.6 parts methyl ethyl ketone, 10 parts toluene, 10 parts isopropyl alcohol, 3 parts polyethylene glycol 300 (supplied by Aldrich Chemical Co.), 6 parts VALIFAST BLACK 3808 (a dye supplied by Orient Corporation of America), 2 parts potassium thiocyanate, 0.4 parts SURFYNOL® 104 PA (a surfactant supplied by Air Products, Inc.), 5 parts nitrocellulose, and 22 parts of the ink jet resin composition described in Example 2. The pH of the ink was 4.7. The ink has a viscosity of 15 Pa s (15 cP) (#1 Shell cup), a dynamic surface tension of 34.9 N/cm (34.9 dynes/cm), and a conductivity of 0.71 mS/cm.

An ink formulated with the foregoing composition was drawn down with a No. 8 wire coated rod onto polyethylene. The resulting image possessed good resistance to scratching, water, and a 10 % % ethanol solution. The image was extremely uniform and free of mottling, crawling, or pinholing defects.

### EXAMPLE 18

Into a one-liter autoclave reactor were charged 1708 parts of DCPD 101® (a dicyclopentadiene supplied by Lyondell Petrochemical), 752 parts LRO-90® (a hydrocarbon mixture containing vinyl aromatic compounds supplied by Lyondell Petrochemical), and 150 parts NEODENE® 16 (a 1-hexadecene supplied by Shell Chemical Co.). The charged autoclave was purged with nitrogen and sealed. The reaction mixture was heated to 260°C over a two hour period and was maintained at 260°C for five hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 220°C. At 220°C, the nitrogen inlet tube was immersed in the liquid resin and the nitrogen flow was adjusted to a rate of approximately 400 ml/min. The resin was sparged for two hours and then discharged into an aluminum pan.

The resulting hydrocarbon/acrylic resin composition had a glass transition temperature of 3°C, a weight average molecular weight of 1290 daltons, a Brookfied viscosity at 135°C of 455 Pa s (455 cP), and a Ring and Ball softening point of 54°C.

### EXAMPLE 19

To a one-liter, four-neck, round-bottom flask equipped with an electric heating mantle, overhead stirrer, thermocouple, nitrogen inlet tube, and Barret trap attached to a water-cooled condenser were added 400 parts of the resin prepared in Example 18 and 126 parts JONREZ® H-2701 (a styrene/acrylic acid polymer having an acid number of 206 supplied by Westvaco Corp.). The contents of the flask were heated to a temperature of 220°C. After five hours at 220°C, the resulting hydrocarbon/acrylic resin composition was collected in an aluminum pan. The resin had an acid number of 32, a weight average molecular weight of 8700 daltons, and a softening point of 146°C.

### EXAMPLE 20

To a one-liter, four-neck, round-bottom flask equipped with an electric heating mantle, overhead stirrer, thermocouple, nitrogen inlet tube, and Barret trap attached to a water-cooled condenser were added 1000 parts of the resin prepared in Example 18 and 190 parts JONREZ® H-2703 (a styrene/acrylic acid polymer having an acid number of 206 supplied by Westvaco Corp.). The contents of the flask were heated to a temperature of 260°C. After five hours at 260°C, the resulting hydrocarbon/acrylic resin composition was collected in an aluminum pan. The resin had a weight average molecular weight of 2170 daltons, a glass transition temperature of 31°C, and a softening point of 101°C.

### EXAMPLE 21

To a one-liter, four-neck, round-bottom flask equipped with an electric heating mantle, overhead stirrer, thermocouple, nitrogen inlet tube, and Barret trap attached to a water-cooled condenser were added 350 parts of the resin described in Example 17 and 40 parts maleic anhydride. The contents of the flask were heated to a temperature of 190°C. After five hours at 190°C, the resulting hydrocarbon/acrylic resin composition was collected in an aluminum pan. The resin had an acid number of 60, a weight average molecular weight of 7970 daltons, and a softening point of 121°C.

### EXAMPLE 22

To a one-liter, four-neck, round-bottom flask equipped with an electric heating mantle, overhead stirrer, thermocouple, nitrogen inlet tube, and Barret trap attached to a water-cooled condenser were added 350 parts of the resin described in Example 17 and 40 parts maleic anhydride. The contents of the flask were heated to a temperature of 190°C. After four hours at 190°C, five parts of diethylene glycol was added and the temperature was increased to 260°C. After two hours at 260°C, the resulting hydrocarbon/acrylic resin composition was collected in an aluminum pan. The resin had an acid number of 53, a weight average molecular weight of 15.5K daltons, and a softening point of 140°C.

### EXAMPLE 23

Into a one-liter autoclave reactor were charged 1399 parts of DCPD 101® (a dicyclopentadiene supplied by Lyondell Petrochemical), 603 parts LRO-90® (a hydrocarbon mixture containing vinyl aromatic compounds supplied by Lyondell Petrochemical), 120 parts of NEODENE® 16 (a 1-hexadecene supplied by Shell Chemical Co.), and 402 parts JONREZ® H-2703 (a styrene/acrylic polymer having a hydroxyl value of 90 supplied by Westvaco Corp.). The charged autoclave was purged with nitrogen and sealed. The reaction mixture was heated to 260°C over a 90 minute period and was maintained at 260°C for five hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 220°C. At 220°C, the nitrogen inlet tube was immersed in the liquid resin and the nitrogen flow was adjusted to a rate of approximately 400 ml/min. The resin was sparged for two hours and then discharged into an aluminum pan.

The resulting hydrocarbon/acrylic resin composition had a weight average molecular weight of 1760 daltons and a Ring and Ball softening point of 81°C. Conversion of this resin into a resinate (via the method described in Example 8) followed by the addition of a pigment dispersion, produces a gravure printing ink with excellent print performance.

### EXAMPLE 24

To a one-liter, four-neck, round-bottom flask equipped with an electric heating mantle, overhead stirrer, thermocouple, nitrogen inlet tube, and Barret trap attached to a water-cooled condenser were added 210 parts of the resin prepared in Example 18 and 9.5 parts JONREZ® H-2701 (a styrene/acrylic acid polymer having an acid number of 210 supplied by Westvaco Corp.). The contents of the flask were heated to a temperature of 260°C. After five hours at 260°C, the resulting hydrocarbon/acrylic resin composition was collected in an aluminum pan. The resin had a weight average molecular weight of 2400 daltons and a glass transition temperature of 116°C.

### EXAMPLE 25

To a one-liter, four-neck, round-bottom flask equipped with an electric heating mantle, overhead stirrer, thermocouple, nitrogen inlet tube, and Barret trap attached to a water-cooled condenser were added 1000 parts of the resin prepared in Example 18 and 190 parts JONREZ® H-2703 (a styrene/acrylic acid polymer having a hydroxyl number of 90 supplied by Westvaco Corp.). The contents of the flask were heated to a temperature of 260°C. After five hours at 260°C, the resulting hydrocarbon/acrylic resin composition was collected in an aluminum pan. The resin had a weight average molecular weight of 2169 daltons, a glass transition temperature of 31°C, and a softening point of 101°C.

### EXAMPLE 26

Into a one-liter autoclave reactor were charged 1066 parts of DCPD 101® (a dicyclopentadiene supplied by Lyondell Petrochemical), 451 parts LRO-90® (a hydrocarbon mixture containing vinyl aromatic compounds supplied by Lyondell Petrochemical), 350 parts JONREZ® H-2704 (a styrene/acrylic polymer having an acid number of 44 supplied by Westvaco Corp.), and 50 parts NEODENE® C-16 (a 1-hexadecene supplied by Shell Chemical Co.). The charged autoclave was purged with nitrogen and sealed. The reaction mixture was heated to 265°C over a one hour period and was maintained at 260°C for five hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for four hours and then discharged into an aluminum pan.

The resulting hydrocarbon/acrylic resin composition had an acid number of 3, a Ring and Ball softening point of 131°C, a glass transition temperature of 75°C, and a weight average molecular weight of 6550 daltons.

### EXAMPLE 27

Into a one-liter autoclave reactor were charged 1401 parts of DCPD 101® (a dicyclopentadiene supplied by from Lyondell Petrochemical), 601 parts LRO-90® (a hydrocarbon mixture containing vinyl aromatic compounds supplied by Lyondell Petrochemical), 120 parts of NEODENE® 16 (a 1-hexadecene supplied by Shell Chemical Co.), and 401 parts JONREZ® H-2704 (an acrylic polymer having an acid number of 90 supplied by Westvaco Corp.). The charged autoclave was purged with nitrogen and sealed. The reaction mixture was heated to 274°C over a two hour period and was maintained at 260°C for 2.5 hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 220°C. At 220°C, the nitrogen inlet tube was immersed in the liquid resin and the nitrogen flow was adjusted to a rate of approximately 400 ml/min. The resin was sparged for two hours and then discharged into an aluminum pan.

The resulting hydrocarbon/acrylic binder resin had an acid number of 1, a glass transition temperature of 38°C, weight average molecular weight of 5860 daltons and a Ring and Ball softening point of 78°C.

A gelled varnish was prepared with the resin according to the following procedure. Into a one-liter, four-neck, round-bottom flask equipped with an electric heating mantle, overhead stirrer, thermocouple, nitrogen inlet tube, and Barret trap attached to a water-cooled condenser was added 34 parts JONREZ® RP-346 (a phenolic rosin resin supplied by Westvaco Corp.), 13 parts of the acrylic/hydrocarbon binder resin described in Example 1, 9 parts alkaline refined linseed oil, and 43 parts MAGIE® M-4700 (a hydrocarbon solvent supplied by Magie Brothers Oil Co.). The contents were heated to a temperature of 155°C and 1 part oxyaluminum octoate was added. The temperature was increased to 165°C and maintained for 45 minutes. The dilutions was 37 %.

A lithographic ink was prepared with the varnish by mixing 50 parts of the varnish, 40 parts of a lithol rubine colorant supplied by Sun Chemicals, and 10 parts of MAGIE® M-4700 (a hydrocarbon solvent supplied by Magie Brothers Oil Co.). Laray viscosity and yield value were measured at 25°C using a Duke D-2102 viscometer. The ink had an apparent viscosity of 211 N s/M² (211 poise) at 2500 sec⁻¹, a yield value of 6080 N/cm² (6080 dynes/cm²) at 2.5 sec⁻¹, and a shortness ratio of 11.5. The resulting ink exhibited excellent color development and outstanding rub resistant properties.

### EXAMPLE 28

Into a two-liter autoclave reactor were charged 1401 parts of DCPD 101® (a dicyclopentadiene supplied by Lyondell Petrochemical), 601 parts LRO-90® (a hydrocarbon mixture containing vinyl aromatic compounds supplied by Lyondell Petrochemical), 401 parts JONREZ® H-2704 (an acrylic polymer having an acid number of 44 supplied by Westvaco Corp.), and 120 parts NEODENE® 16 (1-hexadecene supplied by Shell Chemical Co.). The charged autoclave was purged with nitrogen and sealed. The reaction mixture was heated to 275°C over a two hour period and was maintained at 275°C for three hours. The reactor was then vented carefully, and the molten resin was poured into an aluminum pan and was allowed to cool.

Next, the resin was added to a one-liter, four-neck, round-bottom flask equipped with an electric heating mantle, overhead stirrer, thermocouple, nitrogen inlet tube, and Barret trap attached to a water-cooled condenser. The vessel was purged with nitrogen as the resin was heated to 260°C. At 260°C, the nitrogen inlet tube was immersed in the liquid resin and the nitrogen flow was adjusted to a rate of approximately 400 ml/min. The resin was sparged for 30 minutes and then discharged into an aluminum pan.

The resulting light-orange hydrocarbon/acrylic hybrid ink jet resin composition had an acid number of 4, a Ring and Ball softening point of 78°C, a weight average molecular weight of 5860, and a glass transition temperature of 37.5°C.

An ink composition suitable for continuous ink jet printers was prepared by mixing 50 parts methyl ethyl ketone, 20 parts ethanol, 3 parts diethylene glycol, 5 parts VALIFAST BLACK 3808 (a dye supplied by Orient Corporation of America), 2 parts tetraethyl ammonium bromide, and 20 parts of the ink jet resin composition. The pH of the ink was adjusted to 9.1 with ammonium hydroxide. The ink has a viscosity of 12.8 Pa s (12.8 cP) (#1 Shell cup), a dynamic surface tension of 36.5 N/cm² (36.5 dynes/cm²), and a conductivity of 165 mΩ/cm.

An ink formulated with the foregoing composition was drawn down with a No. 8 wire coated rod onto polyethylene. The resulting image possessed good resistance to scratching, water, and a 10 % % ethanol solution. The image was extremely uniform and free of mottling, crawling, or pinholing defects.

While the invention has been described and illustrated herein by references to various specific materials, procedures, and examples, it is understood that the invention is not restricted to the particular materials, combination of materials, and procedures selected for that purpose. Many modifications and variations of the present invention will be apparent to one of ordinary skill in the art in light of the above teachings. It is therefore understood that the scope of the invention is not to be limited by the foregoing description, but rather is to be defined by the claims appended hereto.

## Claims

1. A method for producing a hydrocarbon/acrylic hybrid resin composition comprising reacting:
a) about 2 % to about 63 % by total weight of the reactants of dicyclopentadiene;
b) about 2 % to about 63 % by total weight of the reactants of a member selected from the group consisting of hydrocarbon monomers capable of undergoing polymerization with dicyclopentadiene and combinations thereof;
c) about 33 % to about 96 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof; and
d) up to about 63 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
at a temperature of from about 160°C to about 300°C for a time sufficient to produce the hydrocarbon/acrylic hybrid resin composition.

2. The method of claim 1 which further comprises reacting:
a) about 10 % to about 40 % by total weight of the reactants of dicyclopentadiene;
b) about 10 % to about 40 % by total weight of the reactants of a member selected from the group consisting of hydrocarbon monomers capable of undergoing polymerization with dicyclopentadiene and combinations thereof;
c) about 40 % to about 80 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof; and
d) up to about 40 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
at a temperature of from about 220°C to about 280°C for a time sufficient to produce the hydrocarbon/acrylic hybrid resin composition.

3. A method for producing a hydrocarbon/acrylic hybrid resin composition comprising:
1) reacting
a) about 2 % % to about 63 % by total weight of the reactants of dicyclopentadiene;
b) about 2 % % to about 63 % by total weight of the reactants of a member selected from the group consisting of hydrocarbon monomers capable of undergoing polymerization with dicyclopentadiene and combinations thereof; and
c) about 33 % to about 96 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof;
at a temperature of from about 160°C to about 300°C for a time sufficient to produce a resin composition; and
2) further reacting:
a) about 35 % to about 98 % by total weight of the reactants of said resin composition, and
b) about 2 % % to about 65 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β- unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
at a temperature of from about 160°C to about 300°C for a time sufficient to produce the hydrocarbon/acrylic hybrid resin composition.

4. The method of claim 3 which further comprises:
1) reacting
a) about 10 % to about 40 % by total weight of the reactants of dicyclopentadiene;
b) about 10 % to about 40 % by total weight of the reactants of a member selected from the group consisting of hydrocarbon monomers capable of undergoing polymerisation with dicyclopentadiene and combinations thereof; and
c) about 40 % to about 80 % by total weight of the reactants of a member selected from the group consisting of acrylic polymers that are carboxylic acid functionalized, acrylic polymers that are hydroxyl functionalized, acrylic polymers that are carboxylic acid functionalized and hydroxylfunctionalized, and combinations thereof;
at a temperature of from about 220°C to about 280°C for a time sufficient to produce a resin composition, and
2) further reacting
a) about 50 % to about 80 % by total weight of the reactants of said resin composition, and
b) about 20 % to about 50 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
at a temperature of from about 220°C to about 280°C for a time sufficient to produce the hydrocarbon/acrylic hybrid resin composition.

5. A method for producing a hydrocarbon/acrylic hybrid resin composition comprising reacting:
a) about 2 % to about 63 % by total weight of the reactants of dicyclopentadiene;
b) about 2 % to about 63 % by total weight of the reactants of a member selected from the group consisting of hydrocarbon resins, modified hydrocarbon resins, and combinations thereof;
c) about 33 % to about 96 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof; and
d) up to about 63 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
at a temperature of from about 140°C to about 300°C for a time sufficient to produce the hydrocarbon/acrylic hybrid resin composition.

6. The method of claim 5 which further comprises reacting:
a) about 10 % to about 40 % by total weight of the reactants of dicyclopentadiene;
b) about 10 % to about 40 % by total weight of the reactants of a member selected from the group consisting of hydrocarbon resins, modified hydrocarbon resins, and combinations thereof;
c) about 40 % to about 80 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof; and
d) up to about 40 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
at a temperature of from about 180°C to about 260°C for a time sufficient to produce the hydrocarbon/acrylic hybrid resin composition.

7. A method for producing a hydrocarbon/acrylic hybrid resin composition comprising:
1) reacting
a) about 2 % to about 63 % by total weight of the reactants of dicyclopentadiene;
b) about 2 % % to about 63 % by total weight of the reactants of a member selected from the group consisting of hydrocarbon resins, modified hydrocarbon resins, and combinations thereof; and
c) about 33 % to about 96 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof;
at a temperature of from about 140°C to about 300°C for a time sufficient to produce a resin composition; and
2) further reacting:
a) about 35 % to about 98 % by total weight of the reactants of said resin composition, and
b) about 2 % % to about 65 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, α,β-unsaturated carboxylic diacids, α,β- unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
at a temperature of from about 140°C to about 300°C for a time sufficient to produce the hydrocarbon/acrylic hybrid resin composition.

8. The method of claim 7 which further comprises:
1) reacting
a) about 10 % to about 40 % by total weight of the reactants of dicyclopentadiene;
b) about 10 % to about 40 % by total weight of the reactants of a member selected from the group consisting of hydrocarbon resins, modified hydrocarbon resins, and combinations thereof; and
c) about 40 % to about 80 % by total weight of the reactants of a member selected from the group consisting of acrylic polymers that are carboxylic acid functionalized, acrylic polymers that are hydroxyl functionalized, acrylic polymers that are carboxylic acid functionalized and hydroxyl functionalized, and combinations thereof;
at a temperature of from about 180°C to about 260°C for a time sufficient to produce a resin composition, and
2) further reacting
a) about 50 % to about 80 % by total weight of the reactants of said resin composition, and
b) about 20 % to about 50 % by total weight of the reactants of a member selected from the group consisting of alcohols having at least one hydroxyl group, alkyl amines having at least one amine group, aryl amines having at least one amine group, metal salts of carboxylic acids, α,β-unsaturated carboxylic acids, *α,*β-unsaturated carboxylic diacids, α,β-unsaturated carboxylic anhydrides, fatty acids, fatty acid compounds, rosin acids, rosin resins, mononuclear phenols, polynuclear phenols, resoles, novolacs, aldehydes, aldehyde acetals, and combinations thereof;
at a temperature of from about 180°C to about 260°C for a time sufficient to produce the hydrocarbon/acrylic hybrid resin composition.

9. The method to any one of the preceding claims wherein said alcohol is a member selected from the group consisting of alcohols capable of undergoing an insertion reaction across a norbornyl site, alcohols capable of undergoing an esterification reaction with an acid group, alcohols capable of undergoing an esterification reaction with an acid equivalent functional group, and combinations thereof.

10. The method to any one of the preceding claims wherein said alkyl amine is a member selected from the group consisting of alkyl amines capable of undergoing an insertion reaction across a norbornyl site, alkyl amines capable of undergoing an esterification reaction with an acid group, alkyl amines capable of undergoing an esterification reaction with an acid equivalent functional group, and combinations thereof.

11. The method to any one of the preceding claims wherein said aryl amine is a member selected from the group consisting of aryl amines capable of undergoing an insertion reaction across a norbornyl site, aryl amines capable of undergoing an esterification reaction with an acid group, aryl amines capable of undergoing an esterification reaction with an acid equivalent functional group, and combinations thereof.

12. The method to any one of the preceding claims wherein said α,β-unsaturated carboxylic acid is a member selected from the group consisting of α,β-unsaturated carboxylic acids capable of undergoing an insertion reaction across a norbornyl site, α,β-unsaturated carboxylic acids capable of undergoing an esterification reaction with an acid group, α,β-unsaturated carboxylic acids capable of undergoing an esterification reaction with an acid equivalent functional group, α,β-unsaturated carboxylic acids capable of undergoing a Diels-Alder addition reaction, α,β-unsaturated carboxylic acids capable of undergoing an ene-reaction, and combinations thereof.

13. The method to any one of the preceding claims wherein said α,β-unsaturated carboxylic diacid is a member selected from the group consisting of α,β- unsaturated carboxylic diacids capable of undergoing an insertion reaction across a norbornyl site, α,β-unsaturated carboxylic diacids capable of undergoing an esterification reaction with an acid group, α,β-unsaturated diacids capable of undergoing an esterification reaction with an acid equivalent functional group, α,β-unsaturated carboxylic diacids capable of undergoing a Diels-Alder addition reaction, α,β-unsaturated carboxylic diacids capable of undergoing an ene-reaction, and combinations thereof.

14. A method to any one of the preceding claims wherein said α,β-unsaturated carboxylic anhydride is a member selected from the group consisting of α,β-unsaturated carboxylic anhydrides capable of undergoing an insertion reaction across a norbornyl site, α,β-unsaturated carboxylic anhydrides capable of undergoing an esterification reaction with an acid group, α,β-unsaturated anhydrides capable of undergoing an esterification reaction with an acid equivalent functional group, α,β-unsaturated carboxylic anhydrides capable of undergoing a Diels-Alder addition reaction, α,β-unsaturated carboxylic anhydrides capable of undergoing an ene-reaction, and combinations thereof.

15. The method to any one of the preceding claims wherein said fatty acid is a member selected from the group consisting of fatty acids capable of undergoing an insertion reaction across a norbornyl site, fatty acids capable of undergoing an esterification reaction with an acid group, fatty acids capable of undergoing an esterification reaction with an acid equivalent functional group, fatty acids capable of undergoing a Diels-Alder addition reaction, fatty acids capable of undergoing an ene-reaction, and combinations thereof.

16. The method to any one of the preceding claims wherein said fatty acid compound is a member selected from the group consisting of fatty acid compounds capable of undergoing an insertion reaction across a norbornyl site, fatty acid compounds capable of undergoing an esterification reaction with an acid group, fatty acid compounds capable of undergoing an esterification reaction with an acid equivalent functional group, fatty acid compounds capable of undergoing a Diels-Alder addition reaction, fatty acid compounds capable of undergoing an ene-reaction, and combinations thereof.

17. The method to any one of the preceding claims wherein said rosin acid is a member selected from the group consisting of tall oil rosin, gum rosin, wood rosin, and combinations thereof.

18. The method to any one of the preceding claims wherein said mononuclear phenol is a member selected from the group consisting of mononuclear phenols capable of undergoing an insertion reaction across a norbornyl site, mononuclear phenols capable of undergoing an esterification reaction with an acid group, mononuclear phenols capable of undergoing an esterification reaction with an acid equivalent functional group, and combinations thereof.

19. The method to any one of the preceding claims wherein said polynuclear phenol is a member selected from the group consisting of polynuclear phenols capable of undergoing an insertion reaction across a norbornyl site, polynuclear phenols capable of undergoing an esterification reaction with an acid group, polynuclear phenols capable of undergoing an esterification reaction with an acid equivalent functional group, and combinations thereof.

20. The method to any one of the preceding claims wherein said resole is a member selected from the group consisting of resoles capable of undergoing an insertion reaction across a norbornyl site, resoles capable of undergoing an esterification reaction with an acid group, resoles capable of undergoing an esterification reaction with an acid equivalent functional group, and combinations thereof.

21. The method to any one of the preceding claims wherein said novolac is a member selected from the group consisting of novolacs capable of undergoing an insertion reaction across a norbornyl site, novolacs capable of undergoing an esterification reaction with an acid group, novolacs capable of undergoing an esterification reaction with an acid equivalent functional group, and combinations thereof.

22. The method to any one of the preceding claims wherein said aldehyde is a member selected from the group consisting of paraformaldehyde, formaldehyde, and combinations thereof.

23. A hydrocarbon/acrylic hybrid resin composition obtainable by the method of any one of the preceding claims.

24. An adhesive composition comprising the hydrocarbon/acrylic hybrid resin composition of claim 23.

25. A lithographic ink composition comprising solvent, colorant, and the hydrocarbon/acrylic hybrid resin composition of claim 23.

26. A gravure ink composition comprising solvent, colorant, and the hydrocarbon/acrylic hybrid resin composition of claim 23.

27. An ink jet ink composition comprising organic solvent, colorant, and the hydrocarbon/acrylic hybrid resin composition of claim 23.

28. A surface sizing composition comprising an aqueous dispersion of the hydrocarbon/acrylic hybrid resin composition of claim 23.
